# EUROPEAN PATENT SPECIFICATION

(11) **EP 1 959 783 B1**
(45) Date of publication and mention of the grant of the patent: **23.11.2011**
(21) Application number: 06820392.6
(22) Date of filing: 04.12.2006
(51) Int. Cl.: A45C 5/14, A63B 55/08

(54) **BAG WITH WHEELS**
TASCHE MIT RÄDERN
SAC AVEC ROUES

(30) Priority: 02.12.2005 GB 0524632; 04.01.2006 US 324246
(43) Date of publication of application: 27.08.2008
(73) Proprietor: 365 Golf Ltd, Buckinghamshire HP22 4JU (GB)
(72) Inventor: MYERS, Chris, Welwyn Garden City Herts AL7 4RT (GB); JOHNSON, Tony, Denby Dale Huddersfield HD8 8RG (GB); PROBEREZNY, Ken, Loughborough Leicestershire LE11 4QT (GB)
(74) Representative: Stainthorpe, Vanessa Juliet
(86) International application number: PCT/GB2006/004506
(87) International publication number: WO 2007/063330

(56) References cited:
- DE-U1- 29 922 082
- US-A- 4 648 612
- US-A- 4 900 043
- US-B1- 6 202 808

## Description

### FIELD OF THE INVENTION

The present invention relates bags. In particular, but not exclusively, the invention relates to a stand carry bag with wheels.

### BACKGROUND TO THE INVENTION

Golf bags are a common golfing accessory used to store golf clubs and other articles such as tees and golf balls.

It is already known to provide wheels for golf bags by providing a frame or a trolley to which the wheels are fitted and upon which a golfer places his golf bag The golf bag can then be pulled or pushed along the ground, for example at a golf course. If a golfer uses such a frame or trolley he is restricted to transporting his bag along a designated path around a golf course. Once on a frame or trolley, the bag becomes heavy and cumbersome to carry, whilst golfers who simply carry their bags are not restricted to those designated paths. However, they are restricted to carrying their bag around the course. Such a device is described in DE-U-29922082.

It is therefore an object of the invention to provide a bag that can be both pulled or carried by the golfer whilst on the golf course, by means of a simple adaptation that can be made during play.

It is an object of the invention that the bag can be placed in a free-standing position on the ground regardless of whether the bag is in the pulling or carrying mode.

### STATEMENTS OF THE INVENTION

In a first aspect of the invention according to claim 1 there is provided apparatus comprising a bag having a base adapted to receive a ground rolling device, said ground rolling device being detachably connectable with the base and comprising an axle provided with a wheel at or adjacent to each end such that when said ground rolling device is connected to the base the wheels project laterally from either side of the base, wherein the axle is received within a channel which extends from one side of the base to the other, such that when the axle is connected to the base the wheels project beyond the edges of the base, and wherein the channel is a recess formed in the underside of the base. According to this aspect of the invention it is possible to provide a bag having a readily removable ground rolling device at the base of the bag, such that the golf bag can be pulled or pushed along on the wheels, or carried by the golfer with or without the wheels attached.

The retaining means may comprise a latch. Preferably, the retaining means further comprises a clip. The latch may be configured to co-operate with the clip to releasably secure the axle to the base.

The presence of a latch has the advantage of reducing a risk that the retaining means is inadvertently loosened during use of the bag. The axle may still be readily removed from the base of the bag by loosening the latch and releasing the clip.

Preferably, the clip is pivotably attached to the bag. The clip may be configured to be pivotable to a position wherein the clip extends across a width of the channel thereby to secure the axle to the base. Preferably the latch is pivotably connected to the bag.

In an alternative embodiment, a rod extends through the base such that respective opposite ends of the rod project laterally beyond respective opposite openings of the base. One or more wheels are attachable to the projecting ends of the rod.

In a further alternative embodiment a pair of axles each having a wheel may be inserted through respective openings of the base.

In a further preferred embodiment of the invention the axle is provided with an axle supporting tube, referred to as a plain bearing.

When the ground rolling device is connected to the base, if the bag is to be placed in a free-standing position there may be a need for a means of stabilizing the bag.

Preferably the bag is provided with support legs pivotably coupled to a body portion of the bag. Preferably, in the retracted configuration the support legs are in juxtaposition with the body portion, and in the extended configuration the support legs project away from the body portion.

Preferably, the legs in combination with the body portion define a tripod structure.

Preferably, the legs are movable between the retracted and extended configurations by means of a spring foot.

Conventionally a spring foot is connected to stand support rods and is depressed by contact with the ground as a result of rocking the bag forward. This depression causes the stand support rods to flex support legs outwardly and in this open position the bag can be supported at an angle to the ground on these legs.

Alternatively or in addition, a downwardly projecting support element may be provided to support the bag in a free-standing position, the support element projecting from the underside of the base. The support element may extend downwardly to substantially the same level as the lowest point of the wheels when the wheels are connected to the bag, such that when the bag is in an upright position the bag is balanced on both the support element and the wheels. Even more preferably this element is provided in a position on the underside of the base in such a way so as to place the centre of gravity of the loaded or unloaded bag on a central, vertical axis of the bag.

The support element may be in the form of a footplate which is moveable between an open downwardly extended position when the bag is free-standing or a closed substantially flat position in which the footplate is secured in a parallel position to the underside of the base when the bag is being carried or pulled. The footplate can therefore be described as being a "fold-away" element.

With wheels and footplate attached, when the bag in an upright position it is raised off the ground by approximately 50mm. With the elevation in the height of the bag above the ground as result of the attachment of the wheels and footplate, an extension to the spring foot is preferably provided. This extension eliminates the requirement to rock the bag too far forward in order to ensure that.the spring contacts the ground as the extension extends the length of the spring foot. It is preferable that this extension can be returned to normal foot height when the bag is in 'carry bag' mode, ie when wheels are removed and the foot plate is collapsed into the base.

In a preferred embodiment of the invention the wheels are fitted with plain bearings (referred to as "life-long bearings"). A hub cap is preferably fitted to at least one of the wheels in order to prevent entry of foreign debris eg. grass and mud into the wheel, causing mechanical failure.

The hub caps are preferably removable, to allow ready replacement of the hub caps.

In a further preferred embodiment of the invention the bag is further provided with a handle in an upper region of the bag. Preferably the handle is extendable from a non-extended position.

Preferably, the handle comprises a shaft and an ergonomically designed hand-grip.

Preferably at least part of the shaft is telescopic, thereby allowing the handle to be extended to any desired height. This is considered particularly advantageous if the same bag is being used by golfers of varying heights.

In a further preferred embodiment of the invention at least part of the handle is rotatable relative to a longitudinal axis of the bag. This rotation allows an increased degree of movement of the bag in the pulling mode; it ensures that the bag is responsive to small movements by the golfer and also improves the stability of the bag as it is manoeuvred around bends or over rough terrain. Consequently, there is a reduced risk of the bag becoming unstable as it is moved, and toppling over.

The shaft of the handle is preferably located within a channel or tube molded into the bag and even more preferably the channel or tube extends at least part of the height of the bag. Preferably this channel or tube extends from the base.

In a further embodiment of the invention the bag is provided with a strap. The strap may be a dual-strap which is conventionally used for satchels, and which enables the golfer to carry the bag and displace the weight of the bag equally across his back and shoulders.

Preferably, the bag is configured to store at least one golf club. Alternatively or in addition, the bag may be configured to store at least one fishing rod. Alternatively, or additionally, the bag may be configured to store gardening equip ment.

In a second aspect of the invention according to claim 14 there is provided a ground rolling device which is detachably connectable to a base of a golf bag, said ground rolling device comprising an axle provided with a wheel at or adjacent each end such that when said ground rolling device is connected to the base the wheels project laterally from either side of said base, wherein the axle is received within a channel which extends from one side of the base to the other, such that when the axle is connected to the base the wheels project beyond the edges of the base, and wherein the channel is a recess formed in the underside of the base.

### BRIEF DESCRIPTION OF THE DRAWINGS

Embodiments of the invention will now be described by way of example with reference to the accompanying drawings, in which:
Figure 1 is a side view of a golf bag according to a first embodiment of the invention;
Figure 2 is a perspective view of an underside of a base of a bag according to the first embodiment;
Figure 3 is a perspective view of a clip according to the first embodiment;
Figure 4 is a perspective view of an inside of a base according to the first embodiment;
Figure 5 is a schematic illustration of the axle and wheel assembly of the first embodiment;
Figures 6a and 6b are schematic plan views of a bag portion and a base portion, respectively of a golf bag according to the first embodiment;
Figure 7 is a perspective view of an underside of a base of a bag according to the first embodiment showing the clip hooked to the latch;
Figure 8 is a further perspective view of the base;
Figure 9 is a perspective view of the base showing the latch in a closed configuration whereby the clip is gripped by the latch;
Figure 10 is a perspective view of an underside of the base showing the latch in a closed configuration;
Figure 11 is a side view of a bag according to the first embodiment showing the latch in an open configuration;
Figure 12 is a side view of a bag according to the first embodiment showing the latch in a closed configuration;
Figure 13 illustrates a hand-grip according to the first embodiment;
Figure 14 illustrates a foot extension according to a second embodiment of the invention;
Figures 15a and 15b illustrate a foot plate structure according to the second embodiment of the invention; and

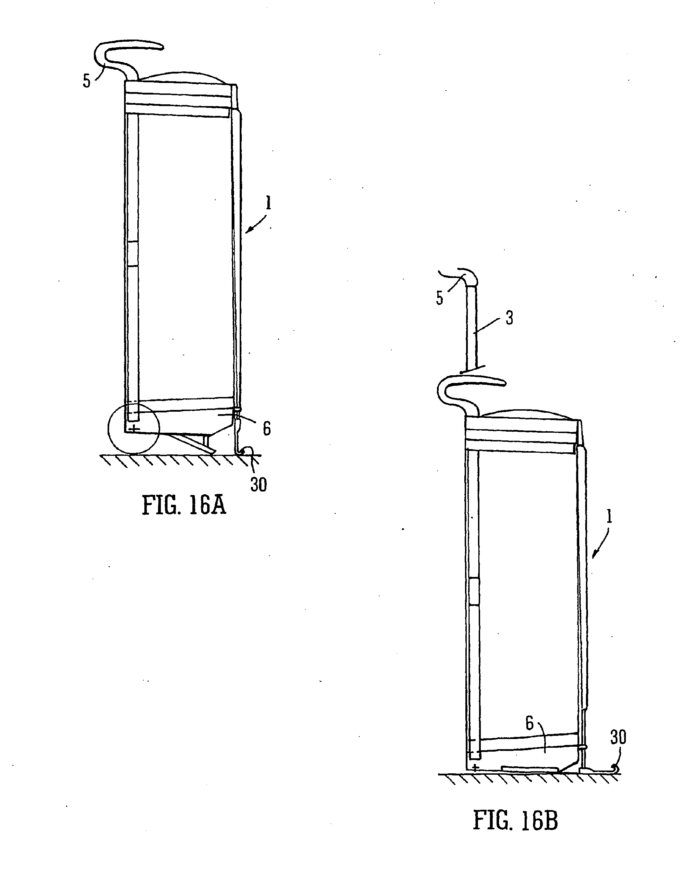

Figure 16 is a side view of a golf bag according to the second embodiment showing the bag in an upright position (a) with wheels attached and (b) with wheels detached.

### DETAILED DESCRIPTION

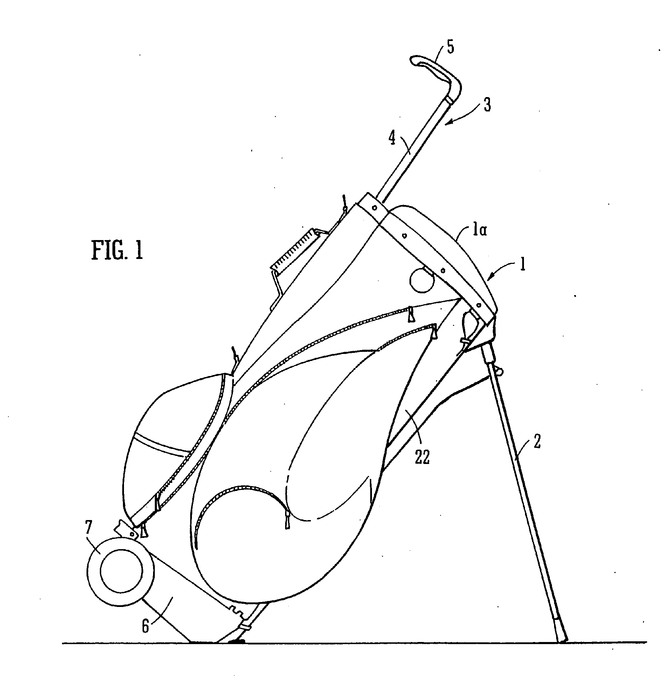

Referring to Figure 1, a golf bag 1 having similar dimensions to a standard lightweight golf carry bag comprises conventional supporting legs 2 for supporting the bag 1 when not being supported by the golfer and which can be stored flat against the bag when not in use. A handle 3 comprising a shaft 4 and a hand-grip 5 extending substantially perpendicular to the shaft is provided, the shaft being extendable from a non-extended position. The bag also has a base 6, and two wheels 7a and 7b mounted at opposite ends of an axle 16 which is removably attachable to the base 6.

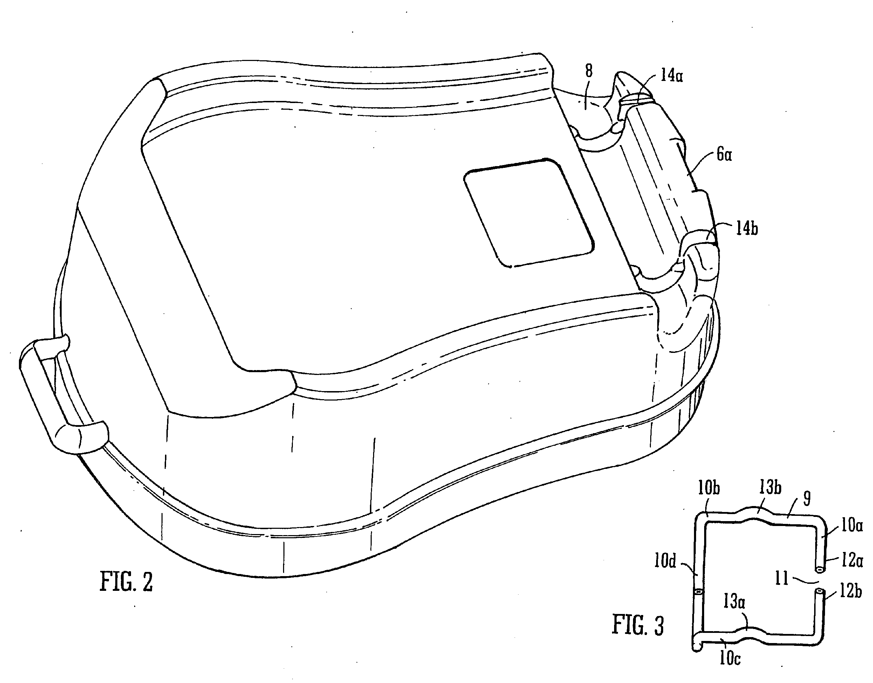

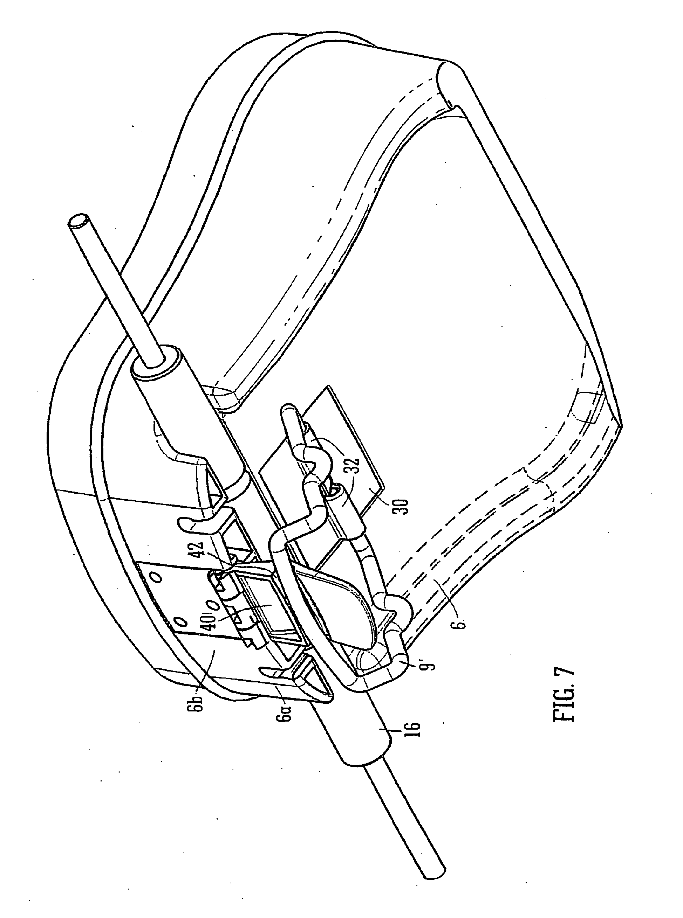

Referring to Figure 2, an underside of the base 6 is shown with a channel-shaped recess 8 extending across its width. This recess is formed adjacent to one of the shorter sides of the base. The axle is received into the recess and secured by a substantially square metal clip 9 which is illustrated in Figure 3. The clip has four sides (10a-d) with an opening 11 being provided within the middle of one side (10a) to form free ends 12a and 12b. These free ends are the point at which the clip is attached to the base 6. In this embodiment the clip is shown (in Figure 7) as being centrally located on the base, although a plurality of smaller clips may be provided for example at positions across a width of the base. The clip 9 is pivotable about its point of attachment to the base. This enables the clip to be moved toward and away from the base, and positioned across an axle which may be located within the recess. The sides of the clip 10b and 10c which extend perpendicular to side 10a are provided with central upwardly arched regions 13a and 13b. The arched regions are provided at locations corresponding to the position of the axle and are arranged to urge the axle into the recess in use. As the provision of the recess results in a ridge 6A being formed at the periphery of the base, channels 14a and 14b are provided in the ridge to allow the sides 10b and 10c of the clip to extend through the ridge.

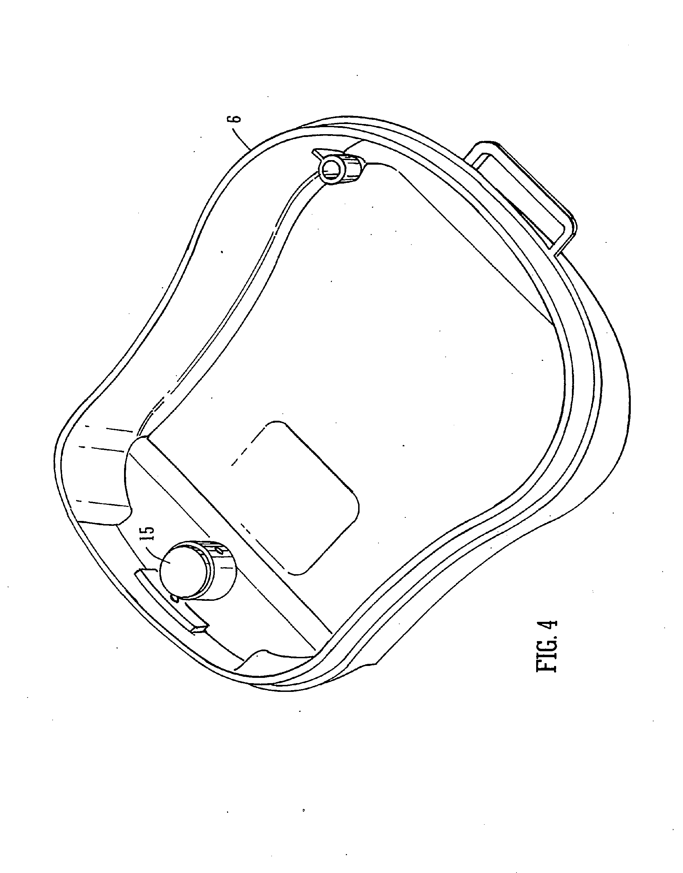

Figure 4 illustrates an inner surface of the base 6 which has a molded spigot 15 for receiving the shaft of the handle (not shown). The shaft fits over the spigot and is glued and pinned in place. This spigot is centrally located above the recess 8 provided on the underside of the base.

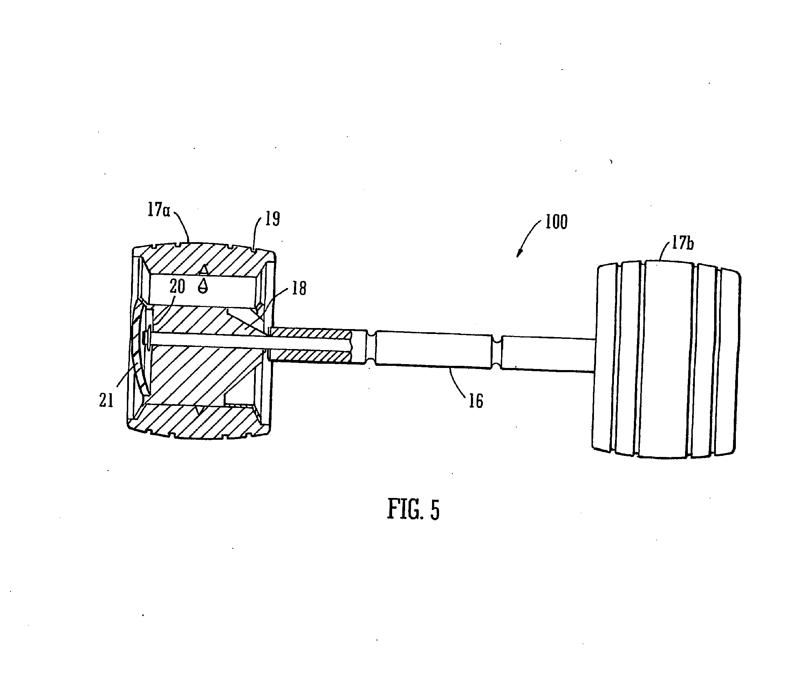

The removable axle and wheel unit are illustrated in Figure 5. The axle 16 is molded from a plastics material and is shown with wheels 17a and 17b located at opposed ends. Each wheel comprises a wheel hub 18, a tyre 19, a spring washer 20 and a hub cap 21. A gap is provided between the axle and the hub sufficient to enable free rotation of the wheel. In some embodiments of the invention the gap is approximately 1 mm.

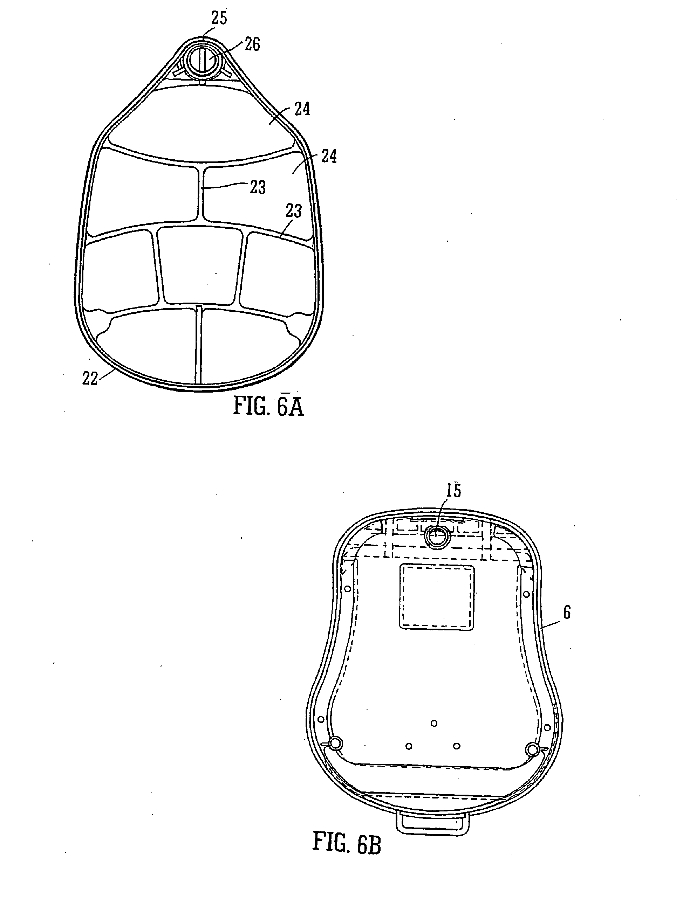

The body portion 22 of the golf bag in which the golf clubs are retained (Figure 6) is molded as a single unit from a rigid plastics material. The body portion takes the form of a substantially hollow cylinder into which the golf clubs are placed with the heads of the clubs protruding from a top of the body portion. A closable flap 1A is provided at the top of the bag to prevent the clubs from falling out of the bag if the bag is tipped, for example when transported in a vehicle. Figure 6a is a top view of the body portion and shows ribs 23 of a plastics material defining varying shaped and sized channels providing compartments 24 suitable for accommodating different golf clubs. The rigidity of the body portion prevents the bag from twisting under load and when being towed.

The body portion is molded so as to have an apical region 25 which houses a substantially cylindrical, hollow shaft 26 into which the shaft 3 of the handle is inserted.

As noted above, an interior surface of the base portion, as shown in Figure 6b is molded to incorporate a molded spigot 15 for receiving the end portion of the shaft of the handle. Thus when the base portion and body portion are connected together an integrally molded hollow shaft for receiving the shaft of the handle is formed. The outer tube is molded into the head and into the base in order to create a stiff dynamic structure.

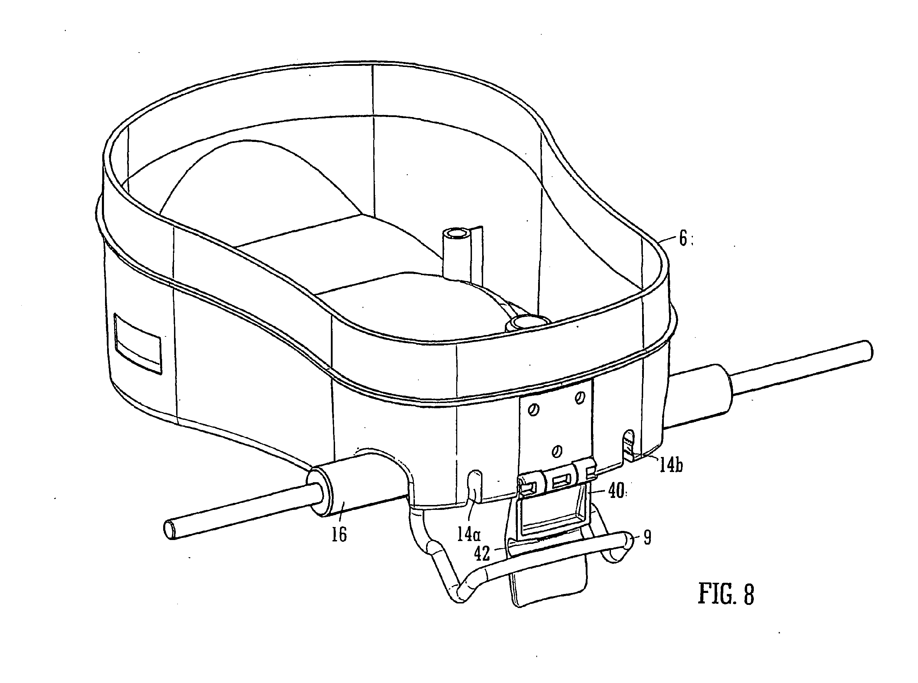

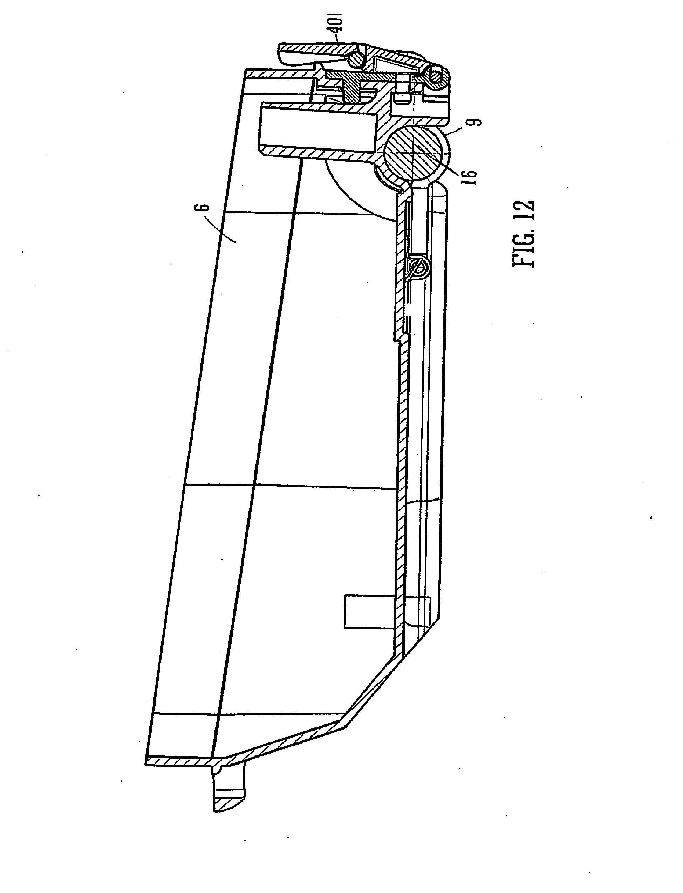

The means for attachment of the axle 16 to the base 6 is illustrated schematically in figures 7 to 12.

Clip 9 is pivotably attached to the base 6 by means of an anchor 30 having a pair of laterally spaced coaxial loops 32 arranged to receive end portions 12a, 12b of clip 9 therethrough.

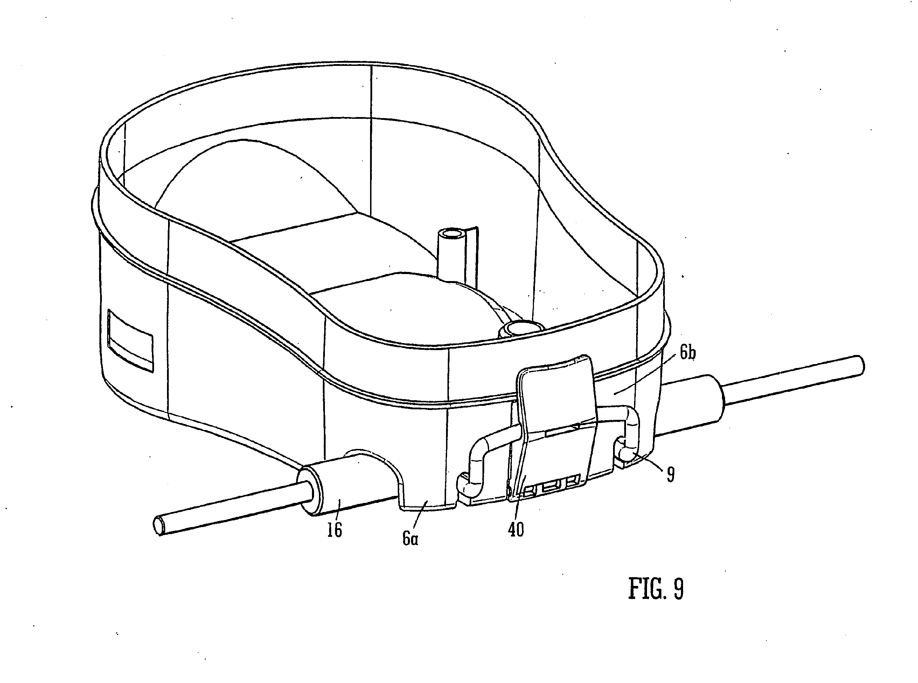

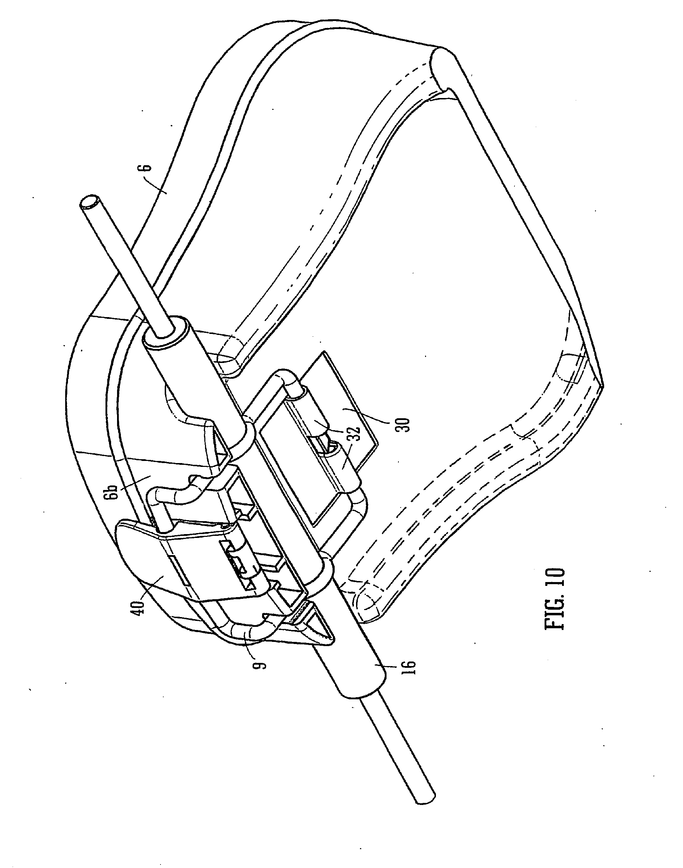

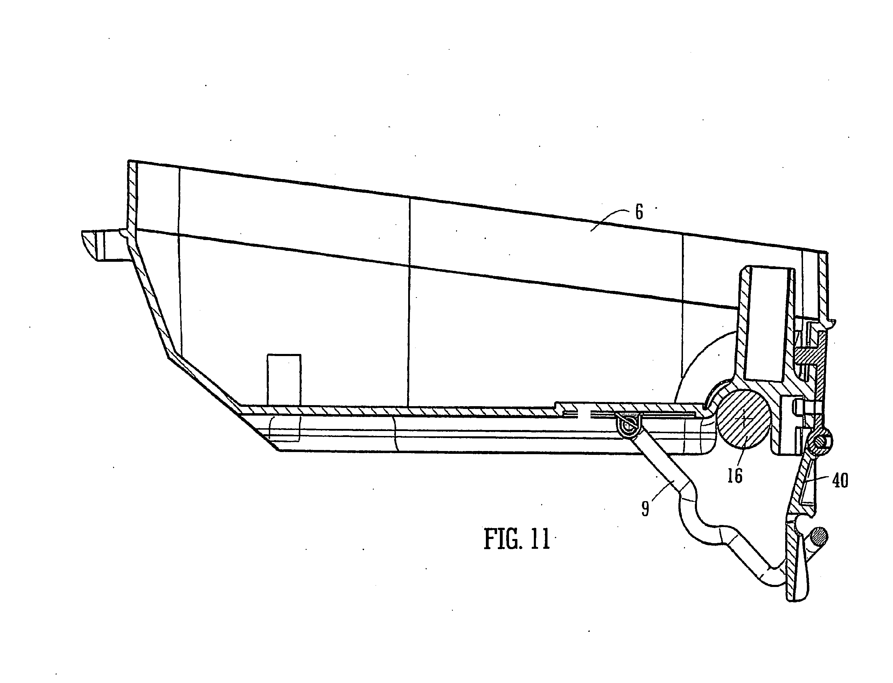

A latch 40 is pivotably mounted to an end face 6B of the base. The latch is provided with a concave recessed portion 42 having a shape corresponding to that of the clip 9 (Figures 7, 10). A portion of edge 10d of clip 9 is receivable in the recessed portion 42. The latch is arranged so that it may be swung into confronting relationship with end face 6B of the base 6 thereby to hold the axle 16 snugly and securely within the channel-shaped recess 8 (Figures 9, 11). The latch 40 is configured to provide a snap-tight closure, resilience of the clip 9 assisting in providing the snap-tight action. In some embodiments of the invention resilience of the base 6 assists in providing the strap-tight action.

In use, a golfer inserts golf clubs into compartments 24 of the body portion 22 and secures the flap 1A to prevent clubs from falling from the bag. The axle 16 with wheels mounted thereon may be removed from the bag by swinging latch 40 away from the base and unhooking clip 9 from the latch.

The clip 9 may be hooked back on to the latch 40 and folded into juxtaposition with the base 6 when the axle 16 is removed.

The wheels may be removed for transportation of the bag 1, for example during transportation in a vehicle, or to reduce a weight of the bag when carried by means of a shoulder strap.

When it is required to drag the bag along ground, the wheels may be reinstalled.

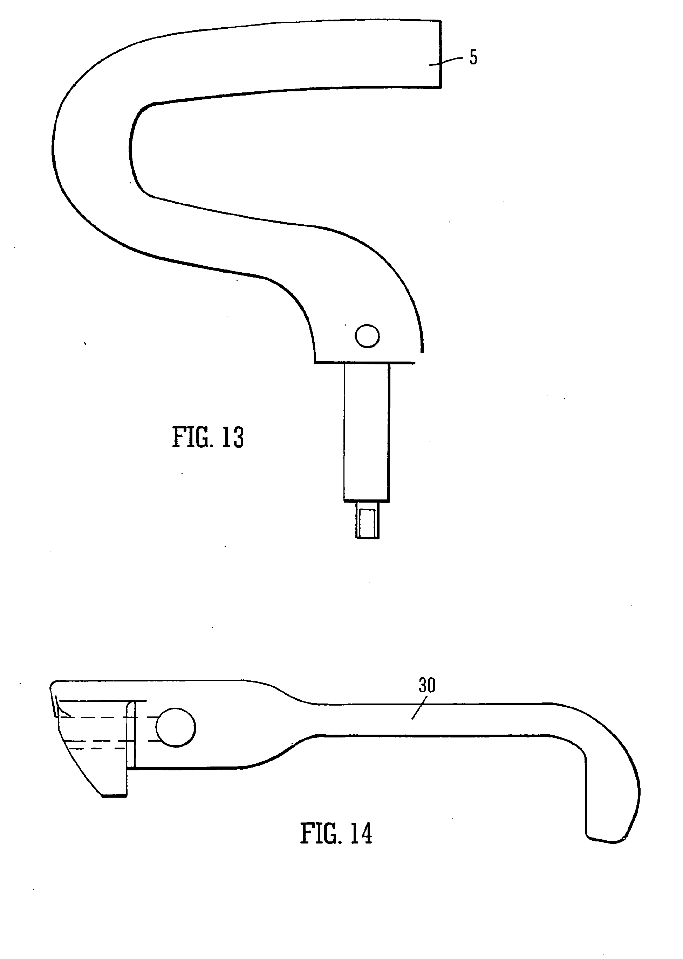

Handle 3 (figure 13) is used to pull the bag along the ground, and is extended from the bag when required.

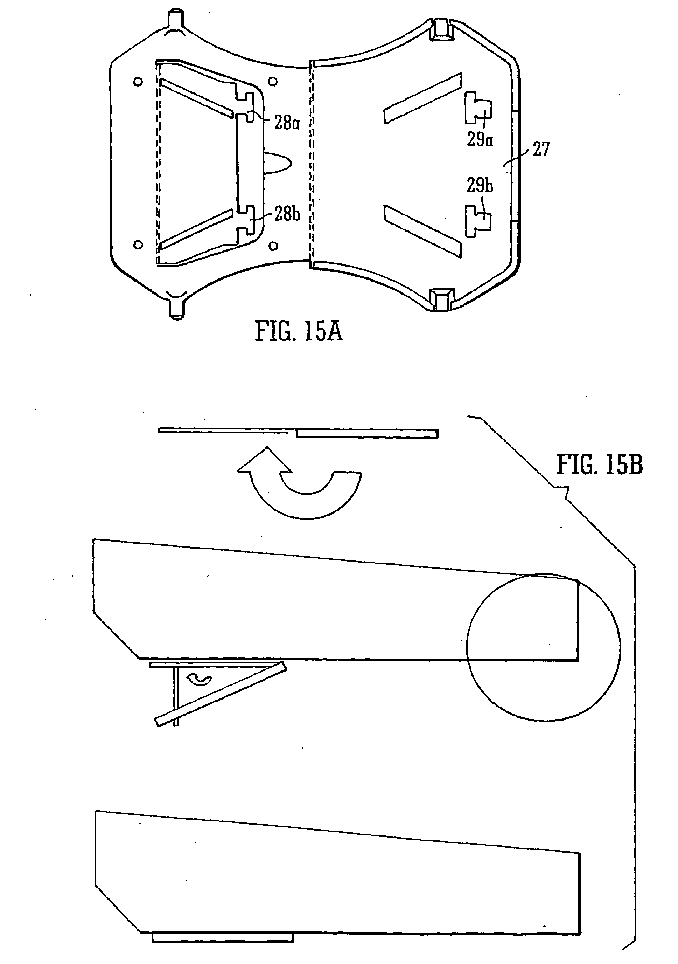

According to a second embodiment of the invention, a golf bag is provided having removable wheels similar to those of the first embodiment, and further having a foot extension and a foot plate 27 (Figures 13, 14 and 15a, 15b).

The footplate 27 is a "live hinge" 30 (Figure 14). When attaching the wheels the golfer will unclip the upper surface of the foot plate and rotate it thereby allowing the legs 28a/b to be erected from a flat position, the "T" heads 29a/b on the leg 28a/b locate in holes 29a/b on the upper surface and then 'click' into place holding the lower surface in an elevated position and hence providing the foot. After the wheels are removed the cycle is reversed to stow the lower surface, inconspicuously under the base of the bag.

When the wheel unit is attached to the base the bag is raised by about 50mm from the ground. In some embodiments of the invention the foot extension 30 the leg actuation system, which is conventional to golf bags, to remain effective even when the base is raised above the ground and the length of the conventional spring element used to actuate the legs is of insufficient length. The foot extension, which is preferably manufactured from a plastics material, is fitted to the lower part of the leg actuation system and preferably clips on to the existing leg actuation system through a suitably molded slot system such that it can be pivoted towards the ground, being of sufficient length to contact the ground the foot extension replaces the function of the spring element. The foot extension is the spring foot and can swivel, clicking into place, to perform as an extension or can swivel back to an un-extended position where it performs at an appropriate length to suit a wheel-less bag.

However, the foot extension and foot plate mechanisms are not required in some embodiments of the invention, such as the first embodiment. This is because it is generally found to be more convenient to support the bag in a freestanding position in a tilted configuration as shown in Figure 1, using conventional supporting legs 2, rather than in an upright condition.

It will be appreciated by those skilled in the art that the apparatus may be produced to any desired scale. For example, bags of the type herein described may be produced of a size suitable for adult use, or of a size suitable for use by children. In other words, a version for use by juniors (including children) is envisaged that is a scaled-down version of that used by adults.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. Apparatus comprising a bag (1) having a base (6) adapted to receive a ground rolling device (100), said ground rolling device being detachably connectable to the base and comprising an axle (16) provided with a wheel (7a,b) at or adjacent each end such that when the ground rolling device is connected to the base the wheels project laterally from either side of the base,
wherein the axle is received within a channel (8) that extends from one side of the base to the other side such that when the axle is connected to the base the wheels project beyond the edges of the base;
and wherein the channel is a recess formed in the underside of the base.

2. Apparatus as claimed in claim 1 wherein retaining means, preferably comprising a latch (40) and/or a clip (9), is provided to retain the axle within the recess.

3. Apparatus as claimed in claim 2 wherein the latch is configured to co-operate with the clip to releasably secure the axle to the base and, preferably, wherein the clip is pivotably attached to the bag.

4. Apparatus as claimed in claim 2 or claim 3 wherein the clip is configured to be pivotable to a position wherein the clip extends across a width of the channel thereby to secure the axle to the base.

5. Apparatus as claimed in claim 4 wherein the latch is pivotably connected to the bag.

6. Apparatus as claimed in any preceding claim wherein the bag is provided with support legs (2) pivotably coupled to a body portion of the bag, the support legs being movable between a retracted configuration and an extended configuration, preferably wherein in the retracted configuration the support legs are arranged to lie in juxtaposition with the body portion, and in the extended configuration the support legs are arranged to project away from the body portion.

7. Apparatus as claimed in claim 6 wherein in the extended configuration, the legs in combination with the body portion define a tripod structure.

8. Apparatus as claimed in claim 6 or claim 7 wherein the legs are movable between the retracted and extended configurations by means of a spring foot, wherein the spring foot preferably being arranged to facilitate opening of the legs when the spring foot is depressed against the ground and the apparatus preferably further comprising means for extending the spring foot towards the ground when the ground rolling device is connected to the base.

9. Apparatus as claimed in any preceding claim, wherein the bag is further provided with a handle (3), preferably comprising a shaft (4) and a hand-grip (5), an an upper region of the bag and wherein said handle is extendable from a non-extended position to an extended position.

10. Apparatus as claimed in claim 9, wherein at least a portion of the shaft is telescopic and/or wherein at least part of the handle is rotatable relative to a longitudinal axis of the bag.

11. Apparatus as claimed in claim 9 or claim 10, wherein the shaft of the handle is located within a molded channel which extends at least pa rt of a length of the bag and preferably from the base of the bag, and the shaft is rotatable within said channel.

12. Apparatus as claimed in any preceding claim further comprising a carry strap which is preferably a dual strap.

13. Apparatus according to any preceding claim, wherein the bag is configured to store at least one golf club, fishing rod or gardening equipment.

14. A ground rolling device (100) which is detachably connectable to a base (6) a golf bag (1), said ground rolling device comprising an axle (16) provided with a wheel (7a,b) or adjacent each end such that when said ground rolling device is connected to the base the wheels project laterally from either side of said base,
wherein the axle is receivable within a channel (8) that extends from one side of the base to the other side such that when the axle is connected to the base the wheels project beyond the edges of the base;
and wherein the channel is a recess formed in the underside of the base.

## Patentansprüche

1. Vorrichtung, die eine Tasche (1) mit einer Basis (6) umfasst, die eine Bodenrollvorrichtung (100) aufnehmen kann, wobei die genannte Bodenrollvorrichtung trennbar mit der Basis verbunden werden kann, und mit einer Achse (16), die mit einem Rad (7a, b) an oder angrenzend an jedes Ende vorgesehen ist, so dass, wenn die Bodenrollvorrichtung mit der Basis verbunden ist, die Räder von jeder Seite der Basis lateral vorstehen;
wobei die Achse in einem Kanal (8) aufgenommen wird, der sich von einer Seite der Basis zu der anderen Seite erstreckt, so dass, wenn die Achse mit der Basis verbunden ist, die Räder über die Kanten der Basis vorstehen;
und wobei es sich bei dem Kanal um eine in der Unterseite der Basis ausgebildete Aussparung handelt.

2. Vorrichtung nach Anspruch 1, wobei eine Halteeinrichtung, die vorzugsweise eine Schnalle (40) und/oder eine Lasche (9) umfasst, vorgesehen ist, um die Achse in der Aussparung zu halten.

3. Vorrichtung nach Anspruch 2, wobei die Schnalle so konfiguriert ist, dass sie mit der Lasche so zusammenwirkt, dass die Achse lösbar an der Basis gesichert wird, und wobei die Lasche vorzugsweise drehbar an der Tasche befestigt ist.

4. Vorrichtung nach Anspruch 2 oder 3, wobei die Lasche so konfiguriert ist, dass sie an eine Position gedreht werden kann, an der sich die Lasche über eine Breite des Kanals erstreckt, wodurch die Achse an der Basis gesichert wird.

5. Vorrichtung nach Anspruch 4, wobei die Schnalle drehbar mit der Tasche verbunden ist.

6. Vorrichtung nach einem der vorstehenden Ansprüche, wobei die Tasche mit Stützbeinen (2) versehen ist, die drehbar mit einem Körperteilstück der Tasche gekoppelt sind, wobei die Stützbeine zwischen einer eingezogenen Konfiguration und einer erweiterten Konfiguration beweglich sind, wobei die Stützbeine in der eingezogenen Konfiguration vorzugsweise so angeordnet sind, dass sie neben dem Körperteilstück liegen, und wobei die Stützbeine in der erweiterten Konfiguration so angeordnet sind, dass sie von dem Körperteilstück weggehend vorstehen.

7. Vorrichtung nach Anspruch 6, wobei die Beine in der erweiterten Konfiguration in Kombination mit dem Körperteilstück eine Stativstruktur definieren.

8. Vorrichtung nach Anspruch 6 oder 7, wobei die Beine zwischen den eingezogenen und erweiterten Konfigurationen durch ein Federbein beweglich sind, wobei das Federbein vorzugsweise so angeordnet ist, dass die Öffnung der Beine erleichtert wird, wenn das Federbein gegen den Boden gedrückt wird, und wobei die Vorrichtung ferner eine Einrichtung zum Erweitern des Federfußes in Richtung des Bodens umfasst, wenn die Bodenrollvorrichtung mit der Basis verbunden ist.

9. Vorrichtung nach einem der vorstehenden Ansprüche, wobei die Tasche ferner mit einem Handstück (3) versehen ist, das vorzugsweise einen Schaft (4) und einen Handgriff (5) in einer oberen Region der Tasche umfasst, und wobei das genannte Handstück aus einer nicht erweiterten Position an eine erweiterte Position erweiterbar ist.

10. Vorrichtung nach Anspruch 9, wobei zumindest ein Teilstück des Schafts teleskopartig ist und/oder wobei zumindest ein Teil des Handstücks im Verhältnis zu einer Längsachse der Tasche drehbar ist.

11. Vorrichtung nach Anspruch 9 oder 10, wobei der Schaft des Handstücks in einem geformten Kanal angeordnet ist, der sich zumindest teilweise über die Länge der Tasche und vorzugsweise von der Basis der Tasche erstreckt, und wobei der Schaft in dem genannten Kanal drehbar ist.

12. Vorrichtung nach einem der vorstehenden Ansprüche, wobei diese einen Tragegurt umfasst, bei dem es sich vorzugsweise um einen doppelten Gurt handelt.

13. Vorrichtung nach einem der vorstehenden Ansprüche, wobei die Tasche so konfiguriert ist, dass sie mindestens einen Golfschläger, eine Angelrute oder ein Gartenwerkzeug aufnehmen kann.

14. Bodenrollvorrichtung (200), die trennbar mit einer Basis (6) einer Golftasche (1) verbunden werden kann, wobei die genannte Bodenrollvorrichtung eine Achse (16) umfasst, die mit einem Rad (7a, b) an oder angrenzend an jedem Ende versehen ist, so dass, wenn die Bodenrollvorrichtung mit der Basis verbunden ist, die Räder von jeder Seite der Basis lateral vorstehen;
wobei die Achse in einem Kanal (8) aufgenommen wird, der sich von einer Seite der Basis zu der anderen Seite erstreckt, so dass, wenn die Achse mit der Basis verbunden ist, die Räder über die Kanten der Basis vorstehen;
und wobei es sich bei dem Kanal um eine in der Unterseite der Basis ausgebildete Aussparung handelt.

## Revendications

1. Appareil comprenant un sac (1) ayant une base (6) adaptée pour recevoir un dispositif de roulement sur le sol (100), ledit dispositif de roulement sur le sol pouvant être connecté de manière amovible à la base et comprenant un axe (16) pourvu d'une roue (7a, b) à ou près de chaque extrémité de telle sorte que lorsque l'appareil de roulement sur le sol est connecté à la base les roues font latéralement saillie de chaque côté de la base,
dans lequel l'axe est reçu dans un canal (8) qui s'étend depuis un côté de la base vers l'autre côté de telle sorte que lorsque l'axe est connecté à la base, les roues faisant saillie au-delà des bords de la base ;
et dans lequel le canal est un retrait formé dans la partie inférieure de la base.

2. Dispositif selon la revendication 1, dans lequel des moyens de retenue, de préférence comprenant un verrou (40) et/ou un clip (9), sont prévus pour retenir l'axe à l'intérieur du retrait.

3. Appareil selon la revendication 2, dans lequel le verrou est configuré pour coopérer avec le clip pour fixer de manière libérable l'axe à la base et, de préférence, dans lequel le clip est attaché de manière pivotante au sac.

4. Appareil selon la revendication 2 ou 3, dans lequel le clip est configuré pour pouvoir pivoter à une position dans laquelle le clip s'étend sur une largeur du canal pour ainsi fixer l'axe à la base.

5. Appareil selon la revendication 4, dans lequel le verrou est connecté de manière pivotante au sac.

6. Appareil selon l'une quelconque des revendications précédentes, dans lequel le sac est pourvu de pieds supports (2) couplés de manière pivotante à une partie formant corps du sac, les pieds supports pouvant bouger entre une configuration rétractée et une configuration étendue, de préférence dans lequel en configuration rétractée les pieds supports sont agencés pour se tenir en juxtaposition avec la partie formant corps, et en configuration étendue les pieds supports sont agencés pour faire saillie de la partie formant corps.

7. Appareil selon la revendication 6, dans lequel dans la configuration étendue, les pieds en combinaison avec la partie formant corps définissent une structure trépied.

8. Appareil selon la revendication 6 ou 7, dans lequel les pieds peuvent passer entre les configurations rétractée et étendue au moyen d'un pied à ressort, dans lequel le pied à ressort est de préférence agencé pour faciliter l'ouverture des pieds lorsque le pied à ressort est appuyé contre le sol et l'appareil de préférence comprenant en outre des moyens pour étendre le pied à ressort vers le sol lorsque le dispositif de roulement sur le sol est connecté à la base.

9. Appareil selon l'une quelconque des revendications précédentes, dans lequel le sac est en outre pourvu d'une poignée (3), de préférence comprenant un arbre (4) et une zone de préhension (5), dans une région supérieure du sac et dans lequel ladite poignée peut s'étendre d'une position non étendue à une position étendue.

10. Appareil selon la revendication 9, dans lequel au moins une partie de l'arbre est télescopique et/ou dans lequel au moins une partie de la poignée peut tourner par rapport à un axe longitudinal du sac.

11. Appareil selon la revendication 9 ou 10, dans lequel l'arbre de la poignée est situé à l'intérieur d'un canal moulé qui s'étend au moins sur une partie d'une longueur du sac et de préférence à partir de la base du sac, et l'arbre peut tourner à l'intérieur dudit canal.

12. Appareil selon l'une quelconque des revendications précédentes, comprenant en outre une sangle de transport qui est de préférence une double sangle.

13. Appareil selon l'une quelconque des revendications précédentes, dans lequel le sac est configuré pour stocker au moins un club de golf, une canne à pêche ou du matériel de jardinage.

14. Dispositif de roulement sur le sol (100) qui peut être connecté de manière amovible à une base (6) d'un sac de golf (1), ledit dispositif de roulement sur le sol comprenant un axe (16) pourvu d'une roue (7a, b) à ou près de chaque extrémité de telle sorte que lorsque l'appareil de roulement sur le sol est connecté à la base les roues font latéralement saillie de chaque côté de la base,
dans lequel l'axe peut être reçu dans un canal (8) qui s'étend depuis un côté de la base vers l'autre côté de telle sorte que lorsque l'axe est connecté à la base, les roues font saillie au-delà des bords de la base ;
et dans lequel le canal est un retrait formé dans la partie inférieure de la base.
